(19) Europäisches Patentamt

European Patent Office

Office européen des brevets

(11) **EP 4 733 865 A1**

(12) **EUROPEAN PATENT APPLICATION**

(43) Date of publication:
**29.04.2026 Bulletin 2026/18**

(21) Application number: **24208221.2**

(22) Date of filing: **22.10.2024**

(51) International Patent Classification (IPC):
**G05B 13/02** (2006.01)     **G05B 15/02** (2006.01)

(52) Cooperative Patent Classification (CPC):
**G05B 15/02; G05B 13/0265;** G05B 2219/2642

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Schweiz AG**
**8047 Zürich (CH)**

(72) Inventors:
• **Bres, Aurelien**
**1140 Wien (AT)**

• **Hari, Ranjeev**
**348615 Singapore (SG)**
• **Krystallidis, Apostolos**
**6300 Zug (CH)**
• **Mittlmeier, Felix**
**1180 Wien (AT)**
• **OFarrell, Donal**
**1070 Wien (AT)**

(74) Representative: **Siemens Patent Attorneys**
**Postfach 22 16 34**
**80506 München (DE)**

(54) **METHOD FOR PROVIDING A BUILDING EQUIPMENT MODEL, METHOD FOR USING A BUILDING EQUIPMENT MODEL, BUILDING EQUIPMENT MODELLING DEVICE, BUILDING EQUIPMENT OPERATION DEVICE, COMPUTER PROGRAM AND COMPUTER READABLE MEMORY**

(57)     The invention relates to a method for providing a building equipment model (12), wherein the method comprises the following steps performed by a building equipment modeling device (10): Receiving building equipment training data (18) comprising sensor variables (20) of respective sensor devices (16) of a building equipment (14) and index variables (22) indicating a state of the building equipment (14); Performing, for predefined targets (28) of the building equipment (14) a respective submodel generation procedure, the respective submodel generation procedure. Generating the submodel (26) representing the predefined target (28) of the building equipment (14) based on the training set (30) for the respective predefined part in a predefined training procedure; and combining the submodels (26) of each of the predefined parts of the building equipment (14) to a building equipment model (12).

FIG 1

## Description

Method for providing a building equipment model, method for using a building equipment model, building equipment modelling device, building equipment operation device, computer program and computer readable memory

The present invention relates to a method for providing a building equipment model for a building equipment comprising sensor devices, a method for using a building equipment model for a building equipment comprising sensor devices, a building equipment modelling device, building equipment operation device, a computer program and a computer readable memory.

Building management systems or smart infrastructure systems are used to monitor an operation of building equipment. During operation, sensor devices of the building equipment provide sensor variables to a building equipment operation device. The sensor variables may correspond to parameters such as a temperature, a humidity, an air quality or other parameters related to a building. The sensor devices may also provide index variables describing a current state of the building equipment. The index variables may, for example, indicate whether an air conditioner is running, whether a heating or a cooling mode of the building equipment is active, or generally indicate a current status of the building equipment that may affect the sensor variables.

One task of the building equipment operation device may be to determine, based on sensor variables, whether the building equipment or sensor devices are operating according to the baseline operation. For a building management or intelligent infrastructure system, real-time information about how the infrastructure is performing compared to its baseline is a challenge. When available, the system may be used to generate alarms to inform operators of deviations from baseline operations. Developing an accurate baseline can often be challenging.

The current state of the art for building management systems and smart infrastructure systems involves the use of physics-based models to generate a digital twin of the system, enabling real-time monitoring and analysis of the performance of building equipment compared to its baseline operation. These models use predetermined mathematical formulas to represent the physical operations, relationships of its subcomponents, and interactions with the world of the building equipment being monitored. These physics-based models are used to represent baseline operation.

While physics-based models have proven effective in many applications, they can be challenging to develop and maintain due to their complexity and dependence on accurate metadata. The accuracy and reliability of these models is highly dependent on the quality and completeness of the metadata used to generate them, which should include parameters characterizing individual components of the building equipment and the overall system configuration of the building equipment. Therefore, manual effort is necessary to create and especially parameterize accurate models.

Another challenge is finding an accurate baseline for comparison. Creating a baseline that accurately reflects typical building equipment performance under different operating conditions can be challenging due to the complexity of building systems and the variability of external factors such as weather, occupancy patterns, and energy prices.

In addition, physics-based models may not always capture the full range of interactions between different building system components or account for unexpected events or failures. This can lead to false alarms or missed problems that could impact building performance and comfort.

Another approach is based on data-driven or machine learning models that can learn patterns in sensor data without the need for explicit mathematical formulas. These models may be better able to capture the complexity and variability of building systems and can potentially provide more accurate and reliable predictions than traditional physics-based models.

However, these alternative modeling approaches come with their own set of challenges, including the need for large amounts of high-quality sensor data, the risk of overfitting or underfitting to the training data, and potential difficulties in interpreting results or identifying causal relationships between variables.

Yet another approach is a use of deterministic rules based on domain knowledge. These rules describe selected aspects of known faults or expected behavior as a function of available sensor data. This approach comes with challenges similar to those encountered with physics-based models. On the one hand, fault detection with deterministic rules is limited to known, anticipated and/or severe faults. Moreover, rule setup and tuning require significant manual effort. Based on domain knowledge, rules describing some aspects of known faults or expected behavior as a function of available readings are set up and regularly evaluated. Drawbacks for this approach comprise that rule setup and tuning require manual effort, whereby adjustments of rule parameters and thresholds can be required not only in the initial phase but also following changes in operation. Another drawback is that detection is limited to known and/or severe faults.

The following Documents describe the current state of the art.

US 10592821 B2 describes systems and methods for self-learning fault detection and diagnosis in an HVAC system.

DE 102021130996 A1 describes a method for predicting weather-related faults in an HVAC system.

US 11796205 B2 describes systems and methods of optimizing HVAC control in a building or network of buildings.

US 10663186 B2 describes an apparatus to provide Fault Detection Diagnostics (FDD) for a Heating, Ventilating, Air Conditioning (HVAC) system with an economizer.

It is an objective of the present invention to provide a solution to allow a monitoring of a building equipment.

This objective is achieved by the respective subject matter of the independent claims. Further implementations and preferred embodiments are subject matter of the dependent claims.

A first aspect of the present invention relates to a method of providing a building equipment model for a building equipment comprising sensor devices. The method according to the first aspect of the invention comprises generating a building equipment model for the building equipment comprising the sensor devices that models the building equipment.

The method is performed by a building equipment modeling device. The building equipment may comprise a heating, ventilation and air conditioning system comprising the sensor devices, wherein the sensor devices are configured to sense the sensor variables comprising a temperature, a humidity and an air flow.

The method comprises receiving building equipment training data by the building equipment modeling device. The building equipment training data comprises sensor variables of the building equipment sensor devices. The sensor variables may be measured by the building equipment sensor devices during a predefined period. The predefined period may be related to a period of a baseline operation of the building equipment. The training data of the building equipment may comprise index variables indicating a current state of the building equipment. The current state may be related to a state of an air conditioner and/or a state of a component thereof and/or a state of a related piece of equipment. The building equipment training data may comprise the sensor variables and the index variables measured for a predefined period of time during an operation of the building equipment. The building equipment training data may also be generated by a simulation of the building equipment.

A next step comprises receiving a metadata defining predefined targets of the building equipment to be modeled by the building equipment model. In other words, the building equipment comprises the sensor devices, wherein specific ones of the sensor devices or groups of sensor devices may be defined as the targets to be modeled by the building equipment model. The respective one of the predefined targets may be specified, either directly by name, an identification code or by a sensor variable type (e.g. "supply air temperature". The sensor variables provided by a particular sensor device may correlate to specific sensor variables and/or to specific index variables. The metadata defines the targets to be modeled. The metadata may further define the output data related to the target and the input data related to specific other sensor devices.

Direct training of the building equipment model to represent each of the targets may be inefficient. Therefore, the invention proposes to divide the training into submodels of the respective targets.

The modeling of the respective target comprises a generation of the respective submodel. Therefore, the method comprises performing a respective submodel generation procedure for each of the predefined targets of the building equipment. The submodel generation procedure comprises the following substeps.

In a first substep of the submodel generation procedure, a training set for training the respective submodel representing the predefined target of the building equipment is generated. The training set comprises a training output set and a training input set.

The training input set comprises predefined sensor variables and predefined index variables of the building equipment training data. The input data set refers to the sensor variables and the index variables that are fed into the submodel as input during the training procedure of the submodel. The sensor variables and index variables of the training input set are selected based on their relevance to the target being modeled.

The training output set comprises predefined sensor variables of the building equipment training data. The training output set refers to the sensor variables that the submodel should be trained to predict, based on the training input set. The training output set may consist of a single sensor variable or a multiple of sensor variables, depending on the modeling technique used and the specific problem being addressed. The building equipment training data may be based on the sensor variables and the index variables recorded by the building equipment. The sensor variables and the index variables may be filtered before providing them as the training data based on available tickets (entry in fault/error log) recorded by the building equipment, avoiding the contamination of the training data with faulty behavior.

By generating these training sets for each predefined target, the submodels representing that target can be efficiently trained because the training set may be limited to data relevant to that submodel. A custom loss function may be used for the training of the submodel. This loss function may relate to two main components: regression loss and anomaly score. Regression loss measures how well the submodel's predictions match the actual training output data for the sensor variables provided by the target. A classification score, on the other hand, measures how accurately faults in the current training input data are identified compared to the training input data recorded during normal behavior of the system.

In addition to these two components, the custom loss function also allows for a user-based cost function to be specified according to the client's preference for recall or precision. Recall is a metric that measures the proportion of actual faults that were correctly identified by the submodel, while precision measures the proportion of identified faults that were actually correct. Clients who want to ensure that all faults are captured may prefer to optimize for recall, while those who mainly want to avoid false positives may prefer to optimize for precision. By allowing for a user-based cost function, the training procedure can be tailored to better meet the specific needs and preferences of individual clients.

Once the submodels for each target have been generated, they are combined to form the building equipment model that represents the building equipment.

The combination of these submodels provides a comprehensive view of the operation of the building equipment and may allow for monitoring.

An advantage of this approach is that it allows for more accurate and detailed modeling of the building equipment because it considers several pre-defined objectives rather than attempting to model the entire system in all operating states at once. In addition, by combining submodels rather than creating a single, monolithic model, this approach can be more efficient and scalable, especially for a complex building equipment with many sensor devices. Overall, this method provides a valuable tool for improving the performance and efficiency of building equipment through detailed modeling and analysis.

The invention comprises further embodiments.

According to another embodiment of the present invention, the predefined training procedure comprises training a set of candidate submodels representing the predefined target of the building equipment. The training of the set of candidate submodels is performed based on the training set for the respective predefined target. These candidate submodels are modeled according to different machine learning algorithms. After training the set of candidate submodels, one of the candidate submodels is selected as the submodel representing the predefined target of the building equipment. The selection is made based on a predefined selection criterion.

By generating the different candidate submodels according to multiple machine learning algorithms in the training process, different patterns and relationships within the data of the training set may be detected that may not be apparent when using the single machine learning algorithm. Generating the different candidate submodels increases the likelihood of identifying an optimal submodel that accurately represents the predefined goal of the building equipment. Furthermore, by selecting the submodel based on a predefined selection criterion, this method ensures that the final model is selected automatically, without the need for manual selection, and in an objective and consistent manner. This increases the reliability and trustworthiness of the resulting building equipment model.

According to a further embodiment of the present invention, the predefined selection criterion used to select the submodel from the set of candidate submodels is based on an evaluation parameter of the respective candidate submodels. In other words, for each of the candidate submodels, the respective evaluation parameter is evaluated. The evaluation parameter is a specific metric or characteristic to determine the suitability of the respective candidate submodel as the final submodel for representing the predefined target of the building equipment. The evaluation parameter can be a relevant measure of accuracy, precision, recall, F1 score, F-beta score or mean squared error. For example, if the submodels are trained for regression tasks, then the mean squared error or root mean squared error could be used as the evaluation parameter. On the other hand, if the submodels are trained for classification tasks, then accuracy, precision, recall, F-beta score or F1 score may be more appropriate.

For each of the candidate submodels, a corresponding score of the evaluation parameter is evaluated according to a predefined evaluation procedure. The evaluation procedure may involve dividing the training set into a validation set and a test set, using cross-validation techniques, or using other statistical methods to evaluate model performance.

The embodiment has the advantage that selecting the submodel based on the evaluation parameter allows identification of the candidate submodel that best fits the training set, ensuring that the selected submodel accurately represents the predefined target. Furthermore, selecting the submodel according to the predefined selection procedure based on the evaluation parameter ensures that the selection procedure is transparent and reproducible. Therefore, the selection procedure may be adjusted in case of problems.

According to another embodiment of the present invention, the evaluation parameter is an R2 parameter. In other words, the predefined selection criterion used to select the submodel from the set of candidate submodels generated by different machine learning algorithms is based on the R-squared (R2) parameter as an evaluation parameter. The R2 parameter is a statistical measure that represents the coefficient of determination. It ranges from 1 to negative values, with higher values indicating better model performance. Using the R2 parameter as an evaluation parameter has the advantage that it is a widely used metric for evaluating the goodness of fit of regression models. The R2 value provides an intuitive measure of how well the submodel can predict the target variable based on the input variables. This makes it easy to interpret and compare the performance of different candidate submodels. Target variables y

$$R^2 = \sum_i (y_i - \hat{y}_i)^2$$

According to a further embodiment of the present invention, the predefined sensor variables of the training output set are assigned to respective output time point. The respective output time points may describe a time of recording of the respective sensor variables of the training output set. The predefined sensor variables and the predefined index variables of the training input set are assigned to respective input time points. The respective input time points may describe a time of recording of the respective predefined sensor variables and the predefined index variables of the training input set. For the predefined training procedure, the respective output time points are assigned to respective continuous input time frames comprising the input time points, wherein the continuous input time frames precede the assigned output time points. In other words, the submodel is trained on the sensor variables of the output set, wherein each of the sensor variables is assigned to the respective output time point. The model may be trained for forecasting the sensor variables of the respective target device. Therefore, a respective one of the sensor variables is assigned to the predefined sensor variables and the predefined index variables of the training input set, that have input time points within a respective timeframe. The timeframe describes a continuous range before the input time point. The embodiment has the advantage that the submodel is trained for forecasting a sensor variable of a target based on sensor variables and the predefined index variables.

According to a further embodiment of the present invention, the input data comprises respective time states related to the time steps of the sensor variable of the target sensor device. These time states may, for example, provide information about the weather at the respective time state, a holiday at the respective time state or maintenance states such as a time interval between the time step and a previous maintenance date of the target device. In other words, the method takes into account external factors, such as weather conditions and maintenance schedules, that may affect the sensor variable being monitored. By incorporating this information into the input data, the trained forecast submodel can generate more accurate predictions about future values of the sensor variable.

According to a further embodiment of the present invention, the method comprises requesting instructions from a knowledgebase device for training the building equipment model for the building equipment by the building equipment modeling device. These instructions include information about which sensor variables and index variables should be included in the training input set for training the respective submodel of the building equipment model representing the respective target of the target set. This knowledgebase may be a central repository or database that stores information about different types of building equipment, including details about their relevant sensor variables and optimal training data inputs for generating the submodels. The building equipment modeling device retrieves the necessary instructions from this knowledgebase in order to correctly generate the building equipment model for the specific building equipment it is monitoring. In other words, instead of having to manually determine which sensor variables and index variables are relevant for each target within the target set, the building equipment modeling device may automatically retrieve these details from the knowledgebase, that may be provided by manufacturers of the target devices and/or the building equipment. This can be especially useful in large-scale or complex building systems where multiple targets may need to be monitored simultaneously.

According to a further embodiment of the present invention, at least one of the predefined targets of the building equipment consists of a single sensor device. In other words, the targets comprise a single sensor device to be modeled individually. Therefore, the respective submodel allows modeling the individual sensor device as a separate target within the building equipment model. This can be useful when certain sensors have unique characteristics or require special treatment. For example, a temperature sensor may have different response times or ranges than other sensors in the building. By treating this sensor as a separate target, the method can ensure that its unique behavior is accurately captured and represented within the building equipment model. In addition, modeling each sensor device as a predefined target allows for more granular monitoring and control of building systems. Each submodel of each target may be used to detect anomalies, predict future behavior, or optimize the performance of each sensor device. By using a set of specialized submodels instead of a single general model, the method enables more precise and effective management of building equipment. In addition, modeling individual sensor devices as predefined targets can increase the scalability and flexibility of the main building equipment model. The sensor device included in the building equipment represented by the master model can be added to the master model without requiring significant changes to the existing submodels of the master model. This embodiment has the advantage that the building equipment model may be easily updated. It may be possible, that for each identified subequipment (e.g. cooling coil within air handling unit), a target variable and a subset of the group variables are defined and used in a "subequipment model". The parallel application of the anomaly detection method with multiple subequipment models helps locate faults in a particular subequipment.

According to a further embodiment of the present invention, at least one of the predefined targets of the building equipment consists of a group of the sensor devices. In other words, the respective target does not represent the single sensor device, but a group of the sensor devices comprising two or more of the sensor devices. Therefore, the respective submodel represents the behavior of several of the sensor devices instead of the individual sensor devices. Using the group of sensor devices as the target instead of defining the respective sensor devices as individual targets allows for more efficient modeling, because using a submodel for the group of sensor devices may be more efficient compared to using a group of submodels to model the sensor devices individually. Defining a group of sensor devices as a predefined target can lead to more efficient model creation and training. By combining data from multiple sensors into a single target, the method can reduce the dimensionality of the modeling problem and speed up the learning process. This can be particularly useful when dealing with large building systems with many sensors and variables. The use of the group may also allow the modeling of complex relationships between the sensor devices in the group. The method can accurately represent complex relationships between different types of sensors, improve the accuracy and robustness of submodels, increase modeling efficiency, and lead to improved management and control of building systems.

According to another embodiment of the present invention, at least one of the predefined targets of the building equipment consists of a logical element representing a physical part or subsystem of the building equipment. This allows for the creation of submodels that represent abstract concepts or behaviors within the building system, rather than just a behavior of a single sensor device or group of sensor devices. A logical element as a predefined target allows the submodel to model higher-level building equipment behavior that may not be modeled by the submodel based on the single sensor device or group of sensor devices. For example, the logical element can be used to represent energy consumption or indoor air quality, even if these concepts cannot be measured directly by individual sensors. The logical element can represent specific sensor variables of different sensor devices. The Embodiment has the advantage that abstract, specialized, and/or accurate submodels can be created that model complex interactions between different types of data in the building system.

According to another embodiment of the present invention, the submodel comprises subsubmodels, each of the subsubmodels being related to a respective combination of index variables. In other words, the submodel is generated based on the subsubmodels. Each of these subsubmodels is associated with a particular combination of index variables. The use of subsubmodels has the advantage of providing a more granular and accurate modeling of a target under different conditions. The index variables provide essential information about the current state of the building's equipment, such as whether an air conditioner is running and/or operating in heating or cooling mode. By training a submodel of a particular combination of index variables, efficiency can be improved. Training a single submodel for all of the combinations of index variables may require more resources than training respective submodels for the respective combinations of index variables. For example, a building facility may have multiple sensor devices that measure temperature, humidity, and air quality in different rooms. The index variables may indicate states such as "air conditioner on" or "preheating on". These states affect the sensor variables. Instead of training the submodel for all combinations of the above index variables, a separate submodel can be trained for each of the index variable combinations. This approach also allows for more efficient and flexible modeling, as each subsubmodel can be developed and updated independently based on its specific combination of index variables. Furthermore, by using subsubmodels related to specific combinations of index variables, an operation can be more efficient. In a first step, a current combination of index variables can be determined. In a second step, the respective submodel may be selected for modeling the target. The step may be interpreted as a multi-state modeling procedure. Given a definition of n index variables being typically status or command variables, up to $2^n$ states are defined corresponding to zero or non-zero values of each index variable. This brings the benefits that thresholds may be adjusted to each of the states. The approach further provides simpler, more interpretable models for each state. The approach further allows an interpretable anomaly detection of cases in which a state not encountered during training is found.

A second aspect of the present invention relates to a method for determining a state of operation of a predefined targets of a building equipment using a building equipment model generated in a method according to the first aspect of the present invention to monitor and evaluate the health of predefined targets in a building system.

The method comprises a plurality of steps performed by a building equipment operation device. A first step comprises receiving building equipment operation data comprising sensor operation values of respective sensor devices of the building equipment and index operation values indicative of a condition of the building equipment. The sensor operation values may correspond to parameters such as a temperature, a humidity, an air quality, and an energy consumption measured by respective sensor devices of the building equipment. The index operation values may indicate states of the building equipment such as "window open" or "air conditioner on". A next step comprises receiving a set of targets defining predefined targets of the building equipment to be modeled by the building equipment model. These targets may refer to specific sensor devices, sensor groups or logical elements of the building equipment.

A next step comprises providing an input operation set comprising predefined sensor operation values and predefined index operation values of the building equipment operation data to the building equipment model. In other words, an input operation set comprising predefined sensor operation values and predefined index operation values of the building equipment operation data is provided to the building equipment model. The building equipment model uses this input to generate an expected output operation set for the respective target, which includes expected sensor variables based on the current state of the building equipment. The expected sensor variables can be related to a baseline behavior of the sensor device. In other words, the expected sensor variables may be sensor variables expected for a baseline behavior of the sensor device as described by the building equipment model.

The expected output operation set for the target is then compared to a measured output operation set of the target comprising corresponding measured sensor variables to generate a deviation between the expected and actual values. In other words, the measured sensor variables provided by the target are compared to the sensor variables expected for the target based on the building equipment model. The deviation describes the difference between the expected sensor variables for the target and the measured sensor variables provided by the target.

In a next step, the deviation is used to evaluate the state of operation of the target. In other words, by comparing the difference between the expected sensor variables for the target and the measured sensor variables provided by the target, it is evaluated whether the target is operating according to the baseline behavior or not. The determination of the state of operation can be based on predefined relationships with respect to the deviation. For example, the building equipment operation device may evaluate the state of the target as compatible with the baseline behavior if the deviation is below a predefined threshold, and may evaluate the state as incompatible with the baseline behavior if the deviation is above the predefined threshold.

According to a further embodiment of the present invention, the state of operation of the respective target depends on an exceeding of a threshold by the deviation. Therefore, the state of operation of the respective target is determined as a function of a threshold value of the deviation. In other words, a threshold or limit is given that separates sensor variables of baseline operation from sensor variables outside of baseline operation. For example, the expected sensor variables may accumulate within a region of higher probability density. The region may be separated from a region of lower probability density by the threshold. Measured sensor variables within the region of baseline operation match the expected sensor variables associated with baseline behavior. Therefore, the state of operation of the target can be evaluated as compatible with the baseline behavior. Sensor variables outside the region of baseline operation may indicate that the behavior is incompatible with the baseline behavior.

According to a further embodiment of the present invention, the threshold is defined as a dynamic threshold determined in a predefined dynamic threshold evaluation procedure based on the input operation set. The dynamic threshold refers to a threshold value that can change over time based on various factors such as changes in the behavior of the building equipment or variations in the operating conditions. In this method, the state of operation of each predefined target is evaluated by comparing the expected output operation set generated by the building equipment model with the measured output operation set from the actual building equipment sensors. The deviation between these two sets is calculated and then used to evaluate the state of operation of the respective target. The dynamic threshold can be applied in this method by adjusting the threshold value based on changes in the behavior of the building equipment or variations in the operating conditions. For example, a higher threshold value may be set during peak hours when the building equipment is under high load compared to off-peak hours when the load is lower. By using a dynamic threshold, the method can provide more accurate and reliable evaluation of the state of operation of each predefined target, taking into account variations in the behavior of the building equipment or changes in the operating conditions. This can help improve the overall performance of the building equipment operation device by reducing false positives and negatives, and providing more timely and accurate alerts for any anomalies or issues with the building equipment.

According to another embodiment of the present invention, the method comprises the steps of generating extrapolated building equipment operation data based on the building equipment operation data according to a predefined extrapolation procedure. The method further comprises providing an extrapolated input operation set comprising predefined sensor operation values and predefined index operation values of the extrapolated building equipment operation data to the building equipment model. The method comprises a step of generating an extrapolated expected output operation set using the building equipment model based on the extrapolated input operation set, the expected output operation set comprising expected sensor variables. The method comprises a step of comparing the extrapolated expected output operation set comprising the expected sensor variables with an extrapolated measured output operation set comprising corresponding extrapolated measured sensor variables to generate an extrapolated deviation of the extrapolated measured sensor variables from the corresponding extrapolated expected output operation set. Based on the extrapolated deviation, an evaluation of an extrapolated operating condition of the respective target is performed.

A third aspect of the present invention relates to a building equipment modeling device. The building equipment modeling device is configured to perform a method according to the first aspect of the present invention.

Accordingly, the building equipment modeling device is configured to provide a building equipment model for a building equipment comprising sensor devices. The building equipment modeling device is configured to receive building equipment training data comprising sensor variables of respective sensor devices of the building equipment and index variables indicating a state of the building equipment. The building equipment modeling device is configured to receive a metadata defining predefined targets of the building equipment to be modeled by the building equipment model.

The building equipment modeling device is configured to perform a respective submodel generation procedure for each of the predefined targets of the building equipment, wherein the building equipment modeling device is configured to generate a training set for training a respective submodel of the building equipment model representing the predefined target of the building equipment, wherein the training set comprises a training output set comprising predefined sensor variables of the building equipment training data and a training input set comprising predefined sensor variables and predefined index variables of the building equipment training data. The building equipment modeling device is configured to generate the submodel representing the predefined target of the building equipment based on the training set for the respective predefined part in a predefined training procedure. The building equipment modeling device is configured to combine the submodels of each of the predefined parts of the building equipment into a building equipment model.

A fourth aspect of the present invention relates to a building equipment operating device. The building equipment operation device is configured to perform a method according to the second aspect of the present invention.

The building equipment operation device is configured to determine a state of operation of predefined targets of a building equipment using a building equipment model for a building equipment comprising a sensor device, using a model generated by a method according to the first aspect of the present invention. The building equipment operation device is configured to receive building equipment operation data comprising sensor operation values of respective sensor devices of the building equipment and index operation values indicating a state of the building equipment, and to receive a metadata defining predefined targets of the building equipment to be modeled by the building equipment model.

The building equipment operation device is configured to provide an input operation set comprising predefined sensor operation values and predefined index operation values of the building equipment operation data to the building equipment model. The building equipment operation device is configured to generate an expected output operation set using the building equipment model based on the input operation set, the expected output operation set comprising expected sensor variables. The building equipment operation device is configured to compare the expected output operation set comprising the expected sensor variables with a measured output operation set comprising corresponding measured sensor variables to generate a deviation of the measured sensor variables from the corresponding expected output operation set. The building equipment operation device is configured to evaluate a state of operation of the respective target based on the deviation.

A fifth aspect of the invention is related to a computer program product comprising program code for performing a method according to the first aspect of the present invention and/or for performing a method according to the second aspect of the present invention. The computer program product may also be regarded as a computer program.

A sixth aspect of the invention is related to a computer-readable storage medium comprising at least the computer program product according to the fifth aspect.

The building equipment modeling device and the building equipment operation device may comprise a computing device.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

Independent of the grammatical term usage, individuals with male, female or other gender identities are included within the term.

In the following, the invention will be explained in detail with reference to specific exemplary implementations and respective schematic drawing. In the drawing, identical or functionally identical elements may be denoted by the same reference signs.

In the figures,

FIG 1 shows a schematic illustration of a building equipment modelling device;

FIG 2 shows a schematic illustration of a building equipment operation device;

FIG. 3 shows a schematic illustration of a method for providing a building equipment model; and

FIG. 4 shows a schematic illustration of a method of using a building equipment model.

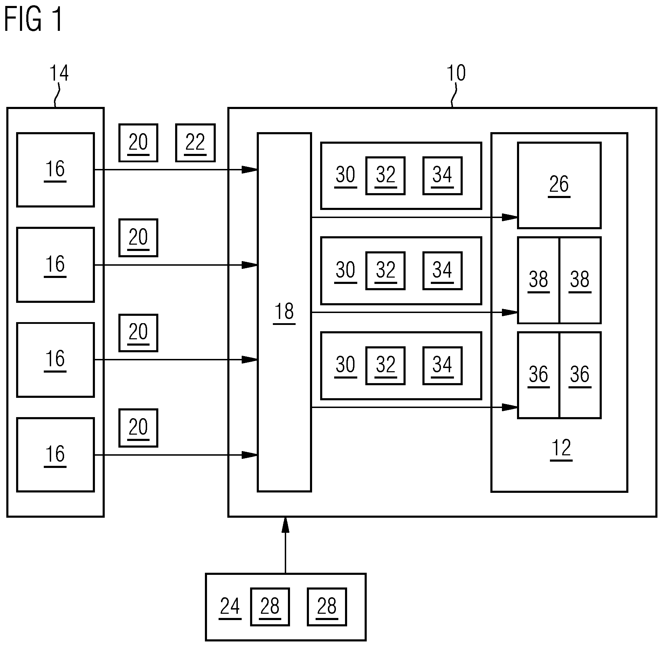

FIG 1 shows a schematic illustration of a building equipment modelling device (10).

The building equipment model 12 may be configured to model the behavior of the sensor devices 16 of the building equipment 14. Specifically, the building equipment model 12 may be set up to represent a baseline behavior of the building equipment 14 to provide a reference for evaluating sensor readings provided by the sensor devices 16. The building equipment 14 may comprise the sensor devices 16 that may be arranged inside the building or an infrastructure system. The sensor devices 16 may be configured to provide respective sensor variables 20 measured by the respective sensor devices 16 of the building equipment 14. The sensor variables 20 may comprise temperature and humidity sensor variables 20 measured by the sensor devices 16. Sensor devices 16 may also provide index variables 22 indicating a state of the building equipment 14. The index variable 22 may for example describe whether a fan is running or whether a valve is commanded open.

The building equipment 14 may provide the sensor variables 20 and the index variables 22 to the building equipment 14 modeling device as building equipment training data 18. The sensor variables 20 and the index variables 22 may be recorded by the sensor devices 16 during a predefined training period of the building equipment 14. During the predefined training period of the building equipment 14, the building equipment 14 may operate according to the predefined baseline behavior.

The building equipment modelling device 10 may be configured to receive a metadata 24 defining predefined targets 28 of the building equipment 14 be modelled by the building equipment model 12. Target 28 may be a single sensor device 16, a predefined group of sensor devices 16 or a logical element. The targets 28 may define components of the building equipment 14 to be modelled by the building equipment model 12.

To generate the building equipment model 12 for the building equipment 14, the building equipment modelling device 10 may be configured to generate respective submodels 26. Each of the submodels 26 may be related to the respective target 28 of the metadata 24. To train the respective submodels 26 the building equipment modelling device 10 may generate respective training sets 30. The training sets 30 may comprise a training input set 34 and a training output set 32. The training input set 34 may comprise predefined sensor variables 20 and predefined index variables 22 of the building equipment training data 18. The training input set 34 may comprise the sensor variables 20 and the index variables 22 of the equipment training set 30 that may be used as independent variables for the respective target 28. The training output set 32 may comprise the sensor variables 20 of the building equipment training data 18 that may be used as dependent variables. As an example, the training output set 32 may comprise sensor variables 20 provided by the respective target 28 sensor device 16 and the training input set 34 may comprise relevant sensor variables 20 provided by other sensor devices 16.

The respective submodel 26 may be trained using the training set 30. The submodel 26 may be generated using a respective training procedure. However, some machine learning algorithms may be more suitable for training than other machine learning training mechanisms. To allow selection of suitable training mechanism the building equipment modelling device 10 may train several candidate submodels 36 based on the metadata 24 for the respective target 28. The respective candidate submodels 36 may be trained according to different respective machine learning algorithms. The building equipment modelling device 10 may be configured to perform a predefined evaluation procedure to generate a respective evaluation parameter for each of the candidate submodels 36. The building equipment modelling device 10 may be configured to select for each of the submodels 26 the candidate submodel 36 according to the predefined selection criterion.

The behavior of the respective sensor device 16 may depend on a predefined index variable 22. It may be possible that the respective submodel 26 is trained using the respective index variable 22. Another approach may comprise a training of different subsubmodels 26 depending on the predefined index variable 22. In other words, the training set 30 for training a first subsubmodel 38 may be different from the training set 30 for training a second subsubmodel 38. The first subsubmodel 38 may be trained on the training set 30 comprising the sensor data recorded when the index variable 22 has a first value. The second subsubmodel 38 may be trained on the training set 30 comprising the sensor data recorded when the index variable 22 has a second value. As an example, the first subsubmodel 38 may be trained on sensor data received during times with supply fan on wherein the first subsubmodel 38 may be trained on sensor data received during times with supply fan off.

The building equipment modelling device 10 may be configured to combine the submodels 26 to the building equipment model 12.

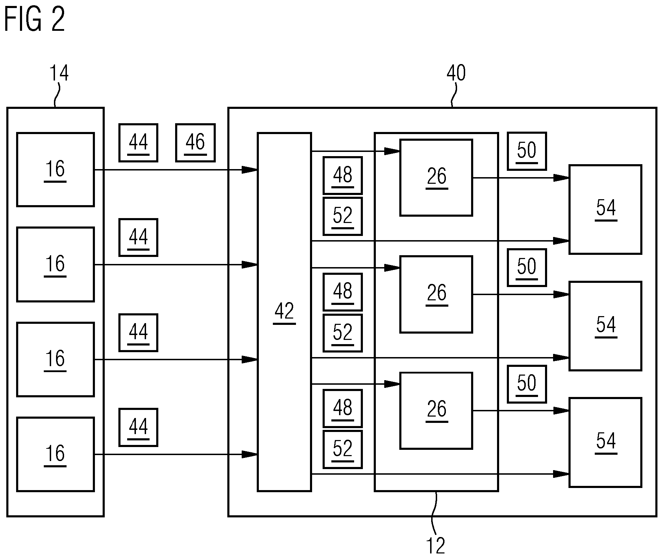

FIG 2 shows a schematic illustration of a building equipment operation device 40.

The building equipment model 12 generated by the building equipment modelling device 10 may be provided to the building equipment operation device 40 to allow monitoring of the building equipment 14. The building equipment operation device 40 may be configured to receive building operation data 42 of the building equipment 14. The building equipment operation data 42 may comprise sensor operation values 44 of the respective sensor devices 16 of the building equipment 14 and index operation values 46 indicating the state of the building equipment 14. The building equipment operation values and the index operation values 46 may be current values provided in real-time. The building equipment operation device 40 may be configured to monitor the behavior of the targets 28 according to the metadata 24. The building equipment operation device 40 may provide for each of the target 28 the respective input operation set comprising the predefined sensor operation values 44 and the predefined index operation values 46 of the building equipment operation data 42 to the building equipment model 12. The building equipment model 12 may be configured to generate an expected output operation set based on the input operation set provided to the building equipment model 12. The expected output operation set may define values expected for a baseline operation of the target 28. The building equipment operation device 40 may be configured to compare the expect output operation set with the respective output operation set and may generate a deviation of the measured sensor operation values 44 from the corresponding sensor operation values 44. As the expected operation values may be related to a baseline behavior, the deviation may be used to determine whether the sensor device 16 operates according to baseline behavior. The building equipment operation device 40 may determine whether the current state of operation of the respective target 28 is compatible to baseline behavior. The current state of operation of the respective target 28 may be compatible to baseline behavior when the deviation is below a predefined threshold. When the deviation is above the predefined threshold, the sensor device 16 may have an error and the current state of operation of the respective target 28 may be incompatible to baseline behavior. If the state of operation of the respective target 28 is incompatible to baseline behavior, the building equipment operation device 40 may send an error message.

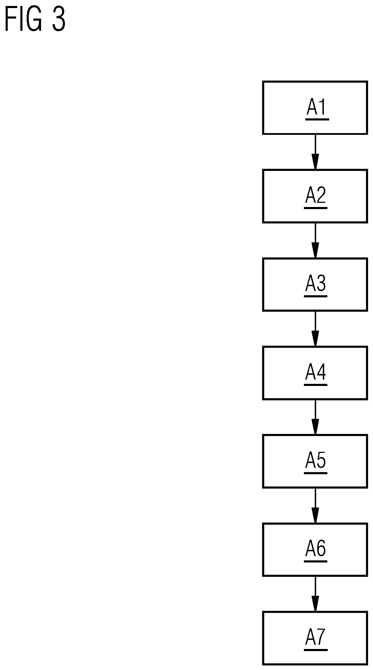

FIG. 3 shows a schematic illustration of a method for providing the building with the model for the building equipment 14 comprising a sensor device 16.

The method may be performed by the building equipment 14 modeling device shown in FIG. 1.

A first step A1 may comprise receiving building equipment training data 18 comprising sensor variables 20 of respective sensor devices 16 of the building equipment 14 and index variables 22 indicating the state of the building equipment 14.

A next step A2 may comprise receiving the metadata 24 defining predefined targets 28 of the building equipment 14 to be modeled by the building equipment model 12.

The next step A3 may comprise performing a respective submodel 26 generation procedure for each of the predefined targets 28 of the building equipment 14. The respective submodel 26 generation procedure may comprise substeps.

A substep A4 may comprise generating a training set 30 for training the respective submodel 26 of the building equipment model 12 present in the predefined target 28 of the building equipment 14, the training set 30 comprising a training output set 32 comprising predefined sensor variables 20 of the building equipment training data 18 and a training input set 34. The training input set 34 may comprise predefined sensor variables 20 and predefined index variables 22 of the building equipment training data 18.

A next substep A5 may comprise generating the submodel 26 representing the predefined target 28 of the building equipment 14 based on the training set 30 for the respective predefined target 28 in the predefined training procedure.

In a next step A6, the submodels 26 of each of the predefined targets 28 of the building equipment 14 may be combined to form the building equipment model 12.

A next step A7 may comprise providing the building equipment model 12 to a building equipment operating device 10.

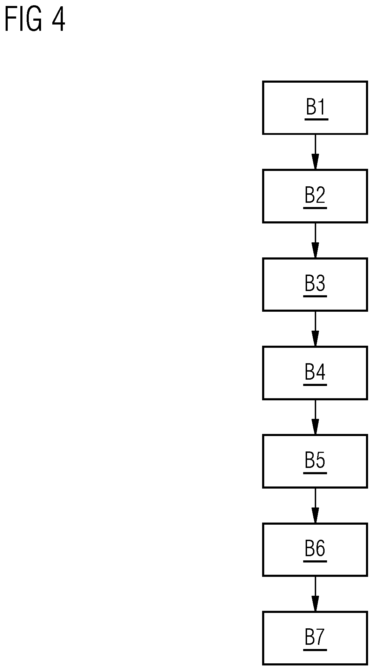

FIG. 4 shows a schematic illustration of a method of using a building equipment model 12 for a building equipment 14 comprising sensor devices 16 using a model generated by a building equipment 14 modeling device.

The building equipment model 12 may be provided by the building equipment 14 modeling device as described for FIG. 3.

In a first step B1, the building equipment operation device 40 may receive building equipment operation data 42 comprising sensor operation values 44 of respective sensor devices 16 of the building equipment 14 and index operation values 46 indicating the state of the building equipment 14.

A next step B2 comprises receiving the metadata 24 defining predefined targets 28 of the building equipment 14 to be modeled by the building equipment model 12.

A next step B3 comprises providing an input operation set comprising predefined sensor operation values 44 and predefined index operation values 46 of the building equipment operation data 42 to the building equipment model 12.

A next step B4 may comprise generating an expected output operation set 50 using the building equipment model 12 based on the input operation set 48, the expected output operation set 50 comprising expected sensor variables 20.

A next step B5 may comprise comparing the expected output operation set 50 comprising the expected sensor variables 20 with the measured output operation set 52 comprising corresponding measured sensor variables 20 to determine the deviation of the measured output operation set 52 from the corresponding expected output operation set 50.

In the next step B6, based on the deviation, the building equipment operation device 40 may evaluate a state of operation of the respective targets 28. The building equipment operation device 40 may evaluate whether the respective target 28 is operating in a manner compatible with the baseline behavior or incompatible with the baseline behavior.

If a respective target 28 operates incompatible to baseline behavior, the building equipment operation device 40 may send an error message to an operator device B7.

The presented methods allow to model complex combinations of sensor devices 16.

The approach is metadata agnostic given that the sensor devices 16 are present in groups and the target 28 sensor devices 16 to be modeled are specified. Optionally, given the metadata and a predefined model catalog built, multiple models can be capitalized to support explainability and root cause analysis. The approach can provide an anomaly detection service to facility managers/infrastructure operators. Prioritization of baseline event deviations for operator attention can be performed along with prediction of anomaly events before they occur. Prioritization of deviation of baseline events for operator attention may be based on a collection of indicators derived from deviations (frequency of alert, alert intensity etc. as KPI metrics).

A building equipment 14 modeling solution is provided that uses automated machine learning methods to predict the sensor variable 20 of a single target 28 sensor devices 16, given multiple sensor devices 16 available from the equipment. The solution generates multiple permutations of models from the provided inputs to automatically model the target 28 sensor as accurately as possible by selecting the best model. The default mode works to complete modeling even when there are a limited number of sensors. Alternatively, if model catalogs are available, it can be forced to model specific groups of available sensor devices 16.

Input can be a file containing a config.json with lists of meterids from sensor devices 16 and applicable start and end date/time timestamps to define the meters and period relevant to model given time series in csv format. In config.json, the provided meterids are further divided into Target 28, Index (states), and Input categories. Target 28 is a single time series modeled after the presumably correlated Input and Index sensors. Index is defined here as sub-equipment conditions that are in an on or off state.

The output can be a machine learning model that can be used to infer target 28 values from incoming values of index and target 28 sensor variables 20. The predictions made can be used to indicate normal equipment health if they match the actual target 28 values, and equipment failure if they deviate from a threshold provided by the model.

Model Training: Models are trained with good quality data and undergo regularization (to prevent overfitting and reduce model complexity). The input space for training the model is a permutation of the equipment state and is modeled separately using various machine learning algorithms such as linear regression, symbolic regression, neural networks, decision trees, and other algorithms. The models are evaluated with test and validation sets, and the top model with the best fit per $R2$ value is taken as representative for each equipment state and combined to form the building equipment model 12 from the collective modeling by state, and results in baseline inferences by the model.

The technical problem addressed by this invention is that of finding anomalous behavior in heating, ventilation and air-conditioning (HVAC) systems in buildings. Such systems are both complex - being composed of interlinked components interacting with each other - and diverse, with variations in configuration, selection, number and size of components, as well as loads and requirements of the served spaces. As a consequence, a global definition of normal operation is generally not given. For a building management or smart infrastructure system, realtime information about the infrastructure functioning compared to its baseline is challenging. When available, the system can be used to raise alarms that help inform operators on deviation from baseline operations. Development of an accurate baseline can often be challenging.

List of Reference

| | |
|---|---|
| 10 | building equipment modeling device |
| 12 | building equipment model |
| 14 | building equipment |
| 16 | sensor device |
| 18 | building equipment training data |
| 20 | sensor variable |
| 22 | index variable |
| 24 | metadata |
| 26 | submodel |
| 28 | target |
| 30 | training set |
| 32 | training output set |

34     training input set
36     candidate submodel
38     subsubmodel
40     building equipment operation device
42     building equipment operation data
44     sensor operation value
46     index operation value
48     input operation set
50     expected output operation set
52     measured output operation set
54     deviation
A1-A7     steps of a method for providing a building equipment model
B1-B7     steps of a method for determining a state of operation of predefined targets

**Claims**

1. A method for providing a building equipment model (12), wherein the method comprises the following steps performed by a building equipment modeling device (10):

    - receiving building equipment training data (18) comprising sensor variables (20) of respective sensor devices (16) of a building equipment (14) and index variables (22) indicating a state of the building equipment (14);
    - receiving a target set (24) defining predefined targets (28) of the sensor devices (16) of the building equipment (14) to be modelled by the building equipment model (12);
    - performing, for each of the predefined targets (28) of the building equipment (14) a respective submodel generation procedure to generate a respective submodel (26) of the building equipment model (12), the respective submodel generation procedure comprising the following substeps:

        -- generating a training set (30) for training the respective submodel (26) of the building equipment model (12) representing the predefined target (28) of the building equipment (14), wherein the training set (30) comprises a training output set (32), comprising predefined sensor variables (20) of the building equipment training data (18) and a training input set (34), comprising predefined sensor variables (20) and predefined index variables (22) of the building equipment training data (18);
        -- generating the submodel (26) representing the predefined target (28) of the building equipment (14) based on the training set (30) for the respective predefined target (28) in a predefined training procedure; and

    - combining the submodels (26) of each of the predefined targets (28) of the building equipment (14) to a building equipment model (12).

2. The method according to claim 1, wherein the predefined training procedure comprises:

    - training a set of candidate submodels (36) representing the predefined target (28) of the building equipment (14) using the training set (30) for the respective predefined target (28), wherein the candidate submodels (36) are modelled according to different respective machine learning algorithms,
    - selecting one of the candidate submodels (36) representing the predefined part of the building equipment (14) as the submodel (26) representing the predefined target (28) of the building equipment (14) as a function of a predefined selection criterion.

3. The method according to claim 2, wherein the predefined selection criterion is based on an evaluation parameter, wherein for each of the candidate submodels (36) a respective evaluation value of the evaluation parameter is evaluated according to a predefined evaluation procedure.

4. The method according to claim 3, wherein the evaluation parameter is a R2 parameter.

5. The method according to any one of the preceding claims, wherein

    - the predefined sensor variables (20) of the training output set (32) are assigned to respective output time points;
    - the predefined sensor variables (20) and the predefined index variables (22) of the training input set (34) are assigned to respective input time points; and
    - for the predefined training procedure the respective output time points are assigned to respective continuous input time frames comprising the input time points, wherein the continuous input time frames precede the assigned output time points.

6. The method according to claim 5, wherein the input data comprise respective time states related to the time steps of the sensor variable (20) of the target (28).

7. The method according to any one of the preceding claims, comprising requesting from a knowledgebase device for the building equipment (14) by the building equipment modeling device (10), instructions for generating the building equipment model (12), the instructions comprising the target set (24) and for each target (28) of the target set (24) predefined sensor variables (20) and the predefined index variables (20) to be included in the training input set (34) of the building equipment training data (18) to train the submodel (26) representing the respective predefined target (28).

8. The method according to any one of the preceding claims, wherein
at least one of the predefined targets (28) of the building equipment (14) consists of a single target sensor device (16) of the sensor devices (16).

9. The method according to any one of the preceding claims, wherein
at least one of the predefined targets (28) of the building equipment (14) consists of a group of target sensor devices (16).

10. The method according to any one of the preceding claims, wherein
at least one of the predefined targets (28) of the building equipment (14) consists of a logical element representing a part of the building equipment (14).

11. The method according to any one of the preceding claims, wherein at least one of the submodels (26) comprises subsubmodels (38), wherein each of the subsubmodels (38) is related to a respective combination of index variables (22).

12. A method for determining a state of operation of a predefined targets (28) of a building equipment (14) using a building equipment model (12) generated by a method according to any one of the preceding claims, the method comprising the following steps performed by a building equipment operation device (40):

- receiving building equipment operation data (42) comprising sensor operation values (44) of the respective sensor devices (16) of the building equipment (14) and index operation values (46) indicating a state of the building equipment (14);
- receiving a metadata (24) defining the predefined targets (28) of the building equipment (14) to be modelled by the building equipment model (12);
- providing an input operation set, comprising predefined sensor operation values (44) and predefined index operation values (46) of the building equipment operation data (42) to the building equipment model (12);
- generate an expected output operation set (50) using the building equipment model (12), based on the input operation set (48), the expected output operation set (50) comprising expected sensor variables (20),
- comparing the expected output operation set (50) comprising the expected sensor variables (20) with a measured output operation set (52) comprising corresponding measured sensor variables (20), to generate a deviation of the measured output operation set (52) from the corresponding expected output operation set (50), and
- based on the deviation, evaluating a state of operation of the respective target (28).

13. The method according to claim 12, wherein the state of operation of the respective target (28) depends on an exceeding of a threshold by the deviation.

14. The method according to claim 12, wherein the threshold is defined as a dynamic threshold determined in a predefined dynamic threshold evaluation procedure based on the input operation set.

15. The method according to claim 12, 14 or 15, wherein the method comprises the following steps:

- generating, based on the building equipment operation data (42), extrapolated building equipment operation data according to a predefined extrapolation procedure;
- providing an extrapolated input operation set, comprising predefined sensor operation values (44) and predefined index operation values (46) of the extrapolated building equipment operation data to the building equipment model (12);
- generate an extrapolated expected output operation set using the building equipment model (12), based on the extrapolated input operation set, the expected output operation set comprising expected sensor variables,
- comparing the extrapolated expected output operation set comprising the expected sensor variables with an extrapolated measured output operation set comprising corresponding extrapolated measured sensor variables, to generate an extrapolated deviation of the extrapolated measured sensor variables from the corresponding extrapolated expected output operation set, and
- based on the extrapolated deviation, evaluating an extrapolated state of operation of the respective target (28).

16. A building equipment modelling device (10), configured to provide a building equipment model (12) for a building equipment (14) comprising sensor devices (16),
wherein the building equipment modelling device (10) is configured to

- receive building equipment training data (18) comprising sensor variables (20) of the respective sensor devices (16) of the building equipment and index variables (22) indicating a state of the building equipment (14);
- receive a metadata (24) defining predefined targets (28) of the building equipment (14) to be modelled by the building equipment model (12);
- perform, for each of the predefined targets (28) of the building equipment (14) a respective submodel generation procedure, wherein the building equipment modeling device (10) is configured to:

    -- generate a training set (30) for training a respective submodel (26) of the building equipment model (12) representing the predefined target (28) of the building equipment (14), wherein the training set (30) comprises a training output set (32), comprising predefined sensor variables (20) of the building equipment training data (18) and a training input set (34), comprising predefined sensor variables (20) and predefined index variables (22) of the building equipment training data (18);
    -- generate the submodel (26) representing the predefined target (28) of the building equipment (14) based on the training set (30) for the respective predefined part in a predefined training procedure; and

- combine the submodels (26) of each of the predefined parts of the building equipment (14) to the building equipment model (12).

17. A building equipment operation device (40), configured to determine a state of operation of predefined targets (28) of a building equipment (14) using a building equipment model (12) generated by a method according to any one of the preceding claims, wherein the building equipment (14) operation device (40) is configured to:

- receive building equipment operation data (42) comprising sensor operation values (44) of the respective sensor devices (16) of the building equipment (14) and index operation values (46) indicating a state of the building equipment (14);
- receive a metadata (24) defining the predefined targets (28) of the building equipment (14) to be modelled by the building equipment model (12);
- provide an input operation set, comprising predefined sensor operation values (44) and predefined index operation values (46) of the building equipment operation data (42) to the building equipment model (12);

- generate an expected output operation set (50) using the building equipment model (12), based on the input operation set (48), the expected output operation set (50) comprising expected sensor variables (20),
- compare the expected output operation set (50) comprising the expected sensor variables (20) with a measured output operation set (52) comprising corresponding measured sensor variables (20), to generate a deviation of the measured sensor variables (20) from the corresponding expected output operation set, and
- determine a state of operation of the respective target (28) based on the deviation.

18. A computer program product comprising program code for performing a method according to any one of the claims 1 to 11 or for performing a method according to any one of the claims 12 to 15.

19. A computer-readable storage medium comprising at least the computer program product according to claim 18.

FIG 1

FIG 2

FIG 3

```
┌──────────┐
│    A1    │
└──────────┘
     │
     ▼
┌──────────┐
│    A2    │
└──────────┘
     │
     ▼
┌──────────┐
│    A3    │
└──────────┘
     │
     ▼
┌──────────┐
│    A4    │
└──────────┘
     │
     ▼
┌──────────┐
│    A5    │
└──────────┘
     │
     ▼
┌──────────┐
│    A6    │
└──────────┘
     │
     ▼
┌──────────┐
│    A7    │
└──────────┘
```

FIG 4

```
┌──────────┐
│    B1    │
└──────────┘
      │
      ▼
┌──────────┐
│    B2    │
└──────────┘
      │
      ▼
┌──────────┐
│    B3    │
└──────────┘
      │
      ▼
┌──────────┐
│    B4    │
└──────────┘
      │
      ▼
┌──────────┐
│    B5    │
└──────────┘
      │
      ▼
┌──────────┐
│    B6    │
└──────────┘
      │
      ▼
┌──────────┐
│    B7    │
└──────────┘
```

Europäisches
Patentamt
European
Patent Office
Office européen
des brevets

# EUROPEAN SEARCH REPORT

**Application Number**

EP 24 20 8221

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/081330 A1 (HASLETT ANDREW MICHAEL [GB] ET AL) 22 March 2018 (2018-03-22) | 1,5-19 | INV. G05B13/02 G05B15/02 |
| A | * the whole document * | 2-4 | |
| X | US 2022/268479 A1 (JANG YE EUN [KR] ET AL) 25 August 2022 (2022-08-25) | 1,16-19 | |
| A | * the whole document * | 2-4 | |
| X | WO 2022/197251 A1 (UNIV NANYANG TECH [SG]) 22 September 2022 (2022-09-22) | 1,16-19 | |
| A | * the whole document * | 2-4 | |
| A | US 2021/191348 A1 (LEE YOUNG M [US] ET AL) 24 June 2021 (2021-06-24) * the whole document * | 1-19 | |

**TECHNICAL FIELDS SEARCHED (IPC)**

G05B

The present search report has been drawn up for all claims

| Place of search | Date of completion of the search | Examiner |
|---|---|---|
| The Hague | 26 March 2025 | José Luis Meseguer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 8221

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2025

| Patent document cited in search report | Publication date | Patent family member(s) | Publication date |
|---|---|---|---|
| US 2018081330 A1 | 22-03-2018 | CN 107430388 A | 01-12-2017 |
| | | EP 3262792 A1 | 03-01-2018 |
| | | GB 2535769 A | 31-08-2016 |
| | | JP 2018506807 A | 08-03-2018 |
| | | KR 20170125349 A | 14-11-2017 |
| | | US 2018081330 A1 | 22-03-2018 |
| | | WO 2016135514 A1 | 01-09-2016 |
| US 2022268479 A1 | 25-08-2022 | KR 20220120004 A | 30-08-2022 |
| | | US 2022268479 A1 | 25-08-2022 |
| WO 2022197251 A1 | 22-09-2022 | CN 117043689 A | 10-11-2023 |
| | | WO 2022197251 A1 | 22-09-2022 |
| US 2021191348 A1 | 24-06-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10592821 B2
- DE 102021130996 A1
- US 11796205 B2
- US 10663186 B2